# FASCICULE DE BREVET EUROPEEN

(11) **EP 3 843 953 B1**
(45) Date de publication et mention de la délivrance du brevet: **05.10.2022**
(21) Numéro de dépôt: 19769997.8
(22) Date de dépôt: 29.08.2019
(51) Int. Cl.: B25J 9/16, B25J 9/00, B25J 13/08, A61H 1/02

(54) **PROCEDE DE COMPENSATION AUTOMATIQUE DE CHARGE POUR UN COBOT OU UN EXOSQUELETTE DE MEMBRE SUPERIEUR**
VERFAHREN ZUR AUTOMATISCHEN LASTKOMPENSATION FÜR EINEN COBOT ODER EIN EXOSKELETT DER OBEREN GLIEDMASSEN
METHOD FOR AUTOMATIC LOAD COMPENSATION FOR A COBOT OR AN UPPER LIMB EXOSKELETON

(30) Priorité: 30.08.2018 FR 1857829
(43) Date de publication de la demande: 07.07.2021
(73) Titulaire: Commissariat à l'Energie Atomique et aux Energies Alternatives, 75015 Paris (FR)
(72) Inventeur: GEFFARD, Franck, 91400 ORSAY (FR)
(74) Mandataire: Lavialle, Bruno François Stéphane
(86) Numéro de dépôt international: PCT/EP2019/073142
(87) Numéro de publication internationale: WO 2020/043851

(56) Documents cités:
- WO-A1-2016/146960
- WO-A1-2018/050191
- WO-A1-2019/025266
- US-A1- 2013 173 058

## Description

### DOMAINE DE L'INVENTION

La présente invention concerne le domaine de la cobotique et plus particulièrement des exosquelettes d'assistance.

### ARRIERE PLAN DE L'INVENTION

Il est connu de commander un actionneur d'un exosquelette d'assistance en réalisant un asservissement en effort dans lequel la consigne d'effort représente une fraction (compensation partielle) ou la totalité (compensation totale) d'une charge à manipuler.

Les exosquelettes passifs utilisent des ressorts qui sont calculés pour fournir des efforts de compensation calibrés par rapport à une charge dont la masse est connue. Pour les exosquelettes actifs, il est nécessaire d'également connaître la masse de la charge à manipuler afin de commander le juste effort de compensation. Il existe de nombreux algorithmes de pilotage d'un actionneur d'exosquelette comme par exemple une commande en vitesse de type proportionnel-intégral ou PI, une commande en effort externe, une commande en accélération, ou une commande en boucle ouverte.

Le document WO 2018/050191 A1 divulgue un procédé de commande d'un actionneur d'un exosquelette pour assister un utilisateur à lever une charge, où des capteurs des contractions des muscles de l'utilisateur sont utilisés pour détecter l'intention de manipuler la charge par l'utilisateur . Cependant le procédé divulgué dans ce document nécessite d'une étape d'entraînement préalable de l'algorithme de détection de l'intention de l'utilisateur pour estimer le niveau d'effort de l'utilisateur, qui est proportionnel au poids de l'objet à manipuler.

### OBJET DE L'INVENTION

Un but de l'invention est de réduire les opérations de mesure préalable de la masse d'une charge à manipuler par un actionneur.

### RESUME DE L'INVENTION

A cet effet, on prévoit un procédé de commande d'un actionneur d'un cobot, l'actionneur étant fonctionnellement relié à une charge à manipuler et piloté par une unité de contrôle, le procédé comprenant les étapes de :
- détecter une intention de manipuler la charge à manipuler par un utilisateur du cobot;
- appliquer une commande croissante à l'actionneur visant à provoquer un déplacement de la charge jusqu'à détecter un mouvement de l'actionneur ou de la charge à manipuler ou une cessation de l'intention de manipuler la charge à manipuler ;
- enregistrer une valeur atteinte par la commande et/ou par un capteur lié à l'actionneur lorsqu'un mouvement de l'actionneur ou de la charge à manipuler est détecté ou qu'une cessation de l'intention de manipuler la charge à manipuler est détectée ;
- utiliser la valeur enregistrée atteinte par la commande et/ou par le capteur lié à l'actionneur pour déterminer une estimation d'un effort résistant exercé par la charge à manipuler ;
- commander l'actionneur à l'aide d'une loi d'asservissement en effort en utilisant l'estimation de l'effort résistant exercé par la charge à manipuler pour établir les commandes à appliquer à l'actionneur.

Ainsi, le pilotage de l'actionneur ne requiert plus de renseigner la masse de la charge à manipuler avant sa manipulation par l'actionneur. Le dispositif de manipulation commandé par le procédé de l'invention permet de manipuler des charges dont les masses sont variées sans que cela ne crée une contrainte pour l'utilisateur.

Avantageusement, la commande croissante résulte d'une consigne de vitesse non nulle appliquée par l'unité de contrôle.

Avantageusement encore, la commande croissante comprend une commande d'effort croissante appliquée par l'unité de contrôle et de commande. L'adaptation à des actionneurs comprenant un moteur rotatif est aisée lorsque la commande d'effort croissante comprend une commande de couple.

Selon un mode de réalisation particulièrement avantageux, la détermination de l'estimation de l'effort résistant se fait en utilisant la valeur prise par un capteur du courant de l'actionneur (ou une estimation de ce courant) lorsqu'un mouvement de l'actionneur a été détecté.

Il est avantageusement possible de se dispenser de la mise en œuvre de capteur de courant lorsque la détermination de l'estimation de l'effort résistant de la charge à manipuler se fait en utilisant la valeur prise par une consigne de courant envoyée à l'actionneur lorsqu'un mouvement de l'actionneur a été détecté.

Avantageusement, le capteur lié au motoréducteur comprend un capteur d'effort ou de couple.

Le procédé est particulièrement rapide lorsque l'étape de détecter un mouvement de l'actionneur comprend une étape de détecter le franchissement d'un seuil de vitesse ou le franchissement d'un seuil de déplacement ou le franchissement d'un seuil d'accélération.

Une mise en œuvre économique a lieu lorsque l'étape de détecter une intention de manipuler la charge à manipuler comprend une étape de détecter un changement d'état d'un capteur d'intention. Une telle mise en œuvre est particulièrement économique lorsque le capteur d'intention comprend un contact sec. Le procédé est particulièrement intuitif lorsque le capteur d'intention est positionné sur une main d'un utilisateur de l'actionneur.

Avantageusement, le capteur d'intention comprend un capteur de pression et/ou un capteur d'attitude et/ou un capteur d'accélération et/ou un capteur de flexion et/ou un capteur myo-électrique.

Pour des questions de robustesse plusieurs capteurs peuvent être placés sur la main de l'utilisateur (et éventuellement associés à un module de reconnaissance) afin de détecter le changement d'état et l'intention de l'utilisateur pour un maximum de formes d'objets et de postures de préhension.

La mise en œuvre du procédé est particulièrement transparente pour l'utilisateur lorsque le procédé comprend une étape supplémentaire de mettre la valeur de l'estimation de l'effort résistant exercé par la charge à zéro lorsque la détection de l'intention de manipuler la charge cesse.

L'invention s'applique également à un cobot comprenant une unité de contrôle et de commande reliée à un actionneur, le cobot comprenant également des moyens de détection d'une intention de manipuler une charge par un utilisateur du cobot et, optionnellement, un capteur lié à l'actionneur reliés à l'unité de contrôle et de commande, le cobot étant agencée pour mettre en œuvre le procédé décrit ci-dessus.

D'autres caractéristiques et avantages de l'invention apparaîtront à la lumière de la description qui suit de modes de réalisation non limitatifs de l'invention.

### BREVE DESCRIPTION DES DESSINS

Il sera fait référence aux figures annexées, parmi lesquelles :
- la figure 1 est une vue schématique de côté d'un exosquelette selon un premier mode de réalisation de l'invention ;
- la figure 2 est une vue schématique de l'exosquelette de la figure 1 dans une configuration de manipulation ;
- la figure 3 est une vue schématique en perspective d'un exosquelette selon un deuxième mode de réalisation de l'invention ;
- la figure 4 est une vue schématique de côté d'un exosquelette selon un troisième mode de réalisation de l'invention ;
- la figure 5 est une vue schématique en perspective d'un exosquelette selon un quatrième mode de réalisation de l'invention ;
- la figure 6 est une vue schématique en perspective d'un exosquelette selon un cinquième mode de réalisation de l'invention ;
- la figure 7 est une vue schématique de côté d'un exosquelette selon un sixième mode de réalisation de l'invention ;
- la figure 8 est une vue schématique de côté d'un exosquelette selon un septième mode de réalisation de l'invention ;
- la figure 9 est une vue schématique de côté d'un cobot selon un huitième mode de réalisation de l'invention ;
- la figure 10 est une vue schématique de côté d'un cobot selon un neuvième mode de réalisation de l'invention.
- la figure 11 est une vue schématique de côté d'un cobot selon un dixième mode de réalisation de l'invention.

### DESCRIPTION DETAILLEE DE L'INVENTION

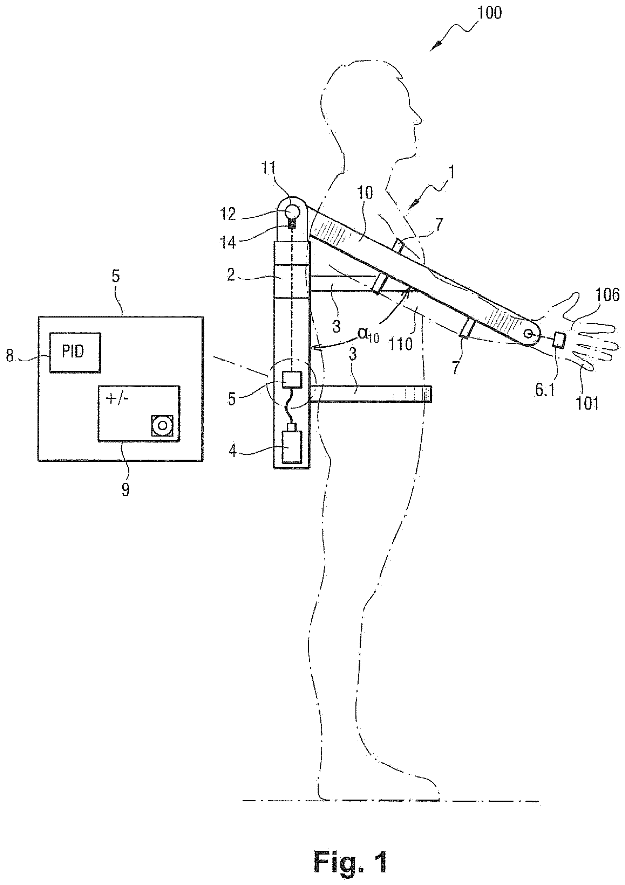

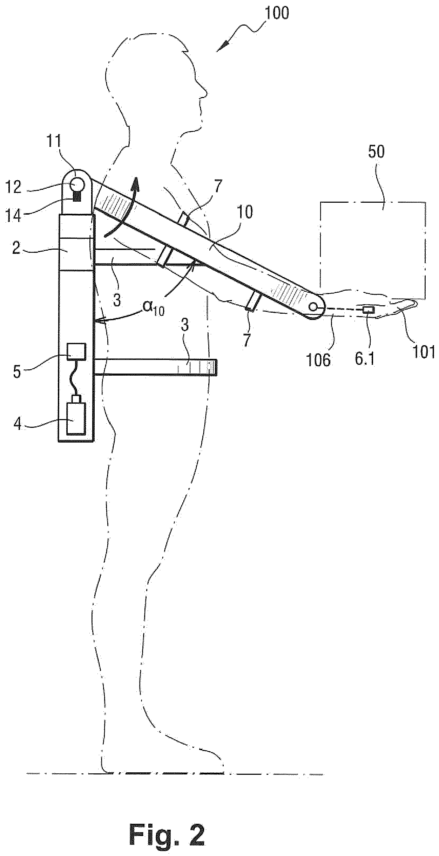

En référence aux figures 1 et 2, l'exosquelette selon l'invention, généralement désigné 1, comprend un segment dorsal 2 pourvu de sangles 3 pour sa fixation à un utilisateur 100. Le segment dorsal comprend une batterie 4 alimentant une unité de contrôle et de commande 5. L'exosquelette 1 comprend également un premier segment de bras 10 droit articulé via un premier motoréducteur 11 sur le segment dorsal 2. Le premier motoréducteur 11 est équipé d'un premier codeur 12 rotatif à points et d'un premier capteur 14 de courant d'alimentation du premier motoréducteur 11. Le premier segment de bras 10 est relié au bras droit 110 de l'utilisateur 100 par des sangles 7. Un premier contacteur palmaire 6.1 Normalement Ouvert destiné à être fixé sur la paume 106 de la main droite 101 de l'utilisateur 100 est relié à l'unité de contrôle et de commande 5. L'unité de contrôle et de commande 5 est également reliée au premier codeur 12, au premier capteur 14, au premier motoréducteur 21 et comprend notamment un algorithme correcteur 8 de type proportionnel-intégral en vitesse ainsi qu'un module 9 de mémoire et de calcul.

En fonctionnement, lorsque l'utilisateur 100 saisit une charge 50 à manipuler de masse inconnue à l'aide de sa main droite 101, il la pose sur la paume 106 de sa main droite 101. Le premier contacteur palmaire 6.1 passe de l'état ouvert à l'état fermé. L'unité de contrôle et de commande 5 détecte ce changement d'état et l'interprète comme signifiant une intention de la part de l'utilisateur 100 de manipuler la charge 50. L'unité de contrôle et de commande 5 fixe alors une première consigne 13 de vitesse de cinq degrés par seconde dans un sens visant à lever la charge 50 au premier motoréducteur 11 (ici une rotation vers le haut dans un plan vertical selon la représentation des figures 1 et 2) et asservit le premier motoréducteur 11 à la mesure du codeur 12. L'algorithme correcteur intégral 8 mesure l'erreur entre la mesure du premier codeur 12 et la première consigne 13 et ajuste la valeur de la commande COM₁₁ envoyée au premier motoréducteur 11 par l'unité de contrôle et de commande 5 en conséquence. Ainsi, tant que le premier codeur 12 mesure une vitesse nulle, l'unité de contrôle et de commande 5 envoie une commande de couple croissante au premier motoréducteur 11. Lorsque le couple C₁₁ appliqué par le premier motoréducteur 11 au premier segment de bras 10 dépasse la valeur d'un couple seuil Cₛ, le premier segment de bras 10 se déplace et le premier codeur 12 enregistre une vitesse V₁₁ du premier motoréducteur 11 non nulle. La valeur du couple seuil Cₛ correspond à la résistance à la rotation du premier motoréducteur 11 exercée essentiellement par le poids propre du segment de bras 10 et la masse de la charge 50 (ainsi qu'éventuellement une partie du poids du bras de l'utilisateur). Lorsque la vitesse V₁₁ atteint la valeur d'une vitesse seuil Vₛ₁₁ -ici d'un mètre par seconde-l'unité de contrôle et commande 5 enregistre la valeur COMₛ₁₁ atteinte par la commande COM₁₁ envoyée au premier motoréducteur 11. Dans le cas présent, le premier motoréducteur 11 étant piloté en intensité, l'unité de contrôle et de commande 5 enregistre la valeur Iₛ₁₁ atteinte par l'intensité d'alimentation I du premier motoréducteur 11. Cette valeur Iₛ₁₁ est mesurée à l'aide du capteur 14. Alternativement, lorsque le premier motoréducteur 11 est piloté par un variateur qui dispose d'une boucle de courant, la valeur Iₛ₁₁ correspond à la consigne appliquée au variateur). L'unité de contrôle et de commande 5 utilise ensuite la valeur Iₛ₁₁ pour déterminer une estimation M₅₀ₑₛ de la masse de la charge 50. Cette détermination peut se faire, par exemple, à l'aide d'une courbe liant l'intensité d'alimentation I₁₁ du premier motoréducteur 11 et le couple utile développé par le premier motoréducteur 11. Le couple Cₛ₁₁ correspondant à l'intensité Iₛ₁₁ est ensuite divisé par la longueur L₁₀ du premier segment de bras 10 éventuellement pondérée du cosinus de l'angle α₁₀ entre le segment dorsal 2 et le premier segment de bras 10, ce qui permet d'en déduire une estimation M₅₀ₑₛ de la masse de la charge 50. Cette estimation M₅₀ₑₛ est enregistrée dans le module 9 et est ensuite utilisée par le module 9 pour paramétrer une loi d'asservissement en effort qui établit les commandes à appliquer au premier motoréducteur 11 par l'unité de commande et de contrôle 5. Cette loi est utilisée pour commander le premier motoréducteur 11 lors de la manipulation de la charge 50.

Lorsque l'utilisateur 100 souhaite poser la charge 50, il place celle-ci sur un support de destination et le premier contacteur palmaire 6.1 passe de l'état fermé à l'état ouvert. L'unité de contrôle et de commande 5 détecte alors la cessation de l'intention de manipuler la charge 50 et procède à une remise à zéro de la valeur de l'estimation M₅₀ₑₛ de la masse de la charge 50 enregistrée dans le module 9.

On obtient ainsi un procédé de commande permettant d'estimer la masse inconnue d'une charge 50 à manipuler par un premier motoréducteur 11 et de commander ensuite le premier motoréducteur 11 en utilisant une estimation M₅₀ₑₛ de la masse inconnue de la charge 50 à manipuler.

Les éléments identiques ou analogues à ceux précédemment décrits porteront une référence numérique identique à ceux-ci dans la description qui suit des deuxième, troisième, quatrième, cinquième, sixième, septième, huitième et neuvième modes de réalisation de l'invention.

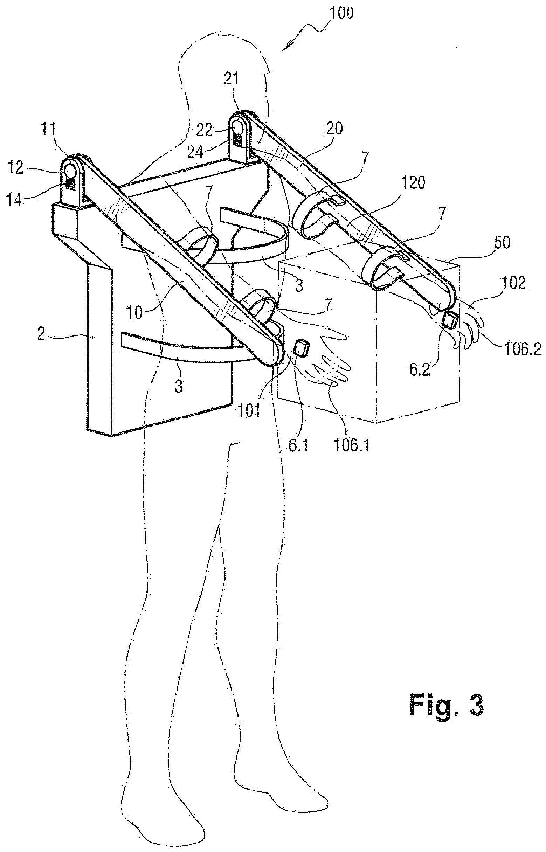

En référence à la figure 3, l'exosquelette 1 comprend également un segment de bras gauche 20 articulé via un deuxième motoréducteur 21 sur le segment dorsal 2. Le deuxième motoréducteur 21 est équipé d'un deuxième codeur 22 rotatif à points et d'un deuxième capteur 24 de courant d'alimentation du deuxième motoréducteur 21. Le segment de bras gauche 20 est relié au bras gauche 120 de l'utilisateur 100 par des sangles 7. Un deuxième contacteur palmaire 6.2 Normalement Ouvert destiné à être fixé sur la paume 106.2 de la main gauche 102 de l'utilisateur 100 est relié à l'unité de contrôle et de commande 5. L'unité de contrôle et de commande 5 est également reliée au deuxième motoréducteur 21, au deuxième codeur 22 et au deuxième capteur 24.

En fonctionnement, lorsque l'utilisateur 100 saisit une charge 50 à manipuler à l'aide de sa main droite 101 et sa main gauche 102, il enserre la charge 50 entre la paume 106.1 de sa main droite 101 et la paume 106.2 de sa main gauche 102. Le premier contacteur palmaire 6.1 et le deuxième contacteur palmaire 6.2 passent alors de l'état ouvert à l'état fermé. L'unité de contrôle et de commande 5 détecte ces changements d'état et les interprète comme signifiant une intention de la part de l'utilisateur 100 de manipuler la charge 50. L'unité de contrôle et de commande 5 fixe alors une première consigne 13 de vitesse de cinq degrés par seconde dans un sens visant à lever la charge 50 au premier motoréducteur 11 (ici une rotation vers le haut dans un plan vertical selon la représentation de la figure 3) et asservit le premier motoréducteur 11 à la mesure du codeur 12. L'unité de contrôle et de commande 5 fixe également une deuxième consigne 23 de vitesse de cinq degrés par seconde dans un sens visant à lever la charge 50 au deuxième motoréducteur 21 (ici une rotation vers le haut dans un plan vertical selon la représentation de la figure 3) et asservit le deuxième motoréducteur 21 à la mesure du deuxième codeur 22.

Lorsque le couple C₁₁ appliqué par le premier motoréducteur 11 au premier segment de bras 10 dépasse la valeur d'un premier couple seuil Cₛ₁₁, le segment de bras 10 se déplace et le premier codeur 12 enregistre une vitesse V₁₁ du premier motoréducteur 11 non nulle. L'unité de contrôle et de commande 5 maintient et enregistre la valeur COMₛ₁₁ atteinte par la commande COM₁₁ envoyée au premier motoréducteur 11. Lorsque le couple C₂₁ appliqué par le deuxième motoréducteur 21 au deuxième segment de bras 20 dépasse la valeur d'un deuxième couple seuil Cₛ₂₁, le deuxième segment de bras 20 se déplace et le deuxième codeur 22 enregistre une vitesse V₂₁ du deuxième motoréducteur 21 non nulle. L'unité de contrôle et de commande 5 maintient et enregistre la valeur COMₛ₂₁ atteinte par la commande COM₂₁ envoyée au deuxième motoréducteur 21.

Dans le cas présent, le premier motoréducteur 11 et le deuxième motoréducteur 21 étant pilotés en intensité, l'unité de contrôle et de commande 5 enregistre la première valeur Iₛ₁₁ atteinte par l'intensité d'alimentation I₁₁ du premier motoréducteur 11 et la deuxième valeur Iₛ₂₁ atteinte par l'intensité d'alimentation I₂₁ du deuxième motoréducteur 21. Ces valeurs sont mesurées à l'aide du premier capteur 14 et du deuxième capteur 24. L'unité de contrôle et de commande 5 utilise ensuite la première valeur Iₛ₁₁ et la deuxième valeur I_{S21} pour déterminer une estimation M₅₀ₑₛ de la masse de la charge 50. Cette estimation M₅₀ₑₛ est enregistrée dans le module 9 et est ensuite utilisée par le module 9 pour paramétrer une loi d'asservissement en effort qui établit les commandes à appliquer au premier motoréducteur 11 et au deuxième motoréducteur 21 par l'unité de commande et de contrôle 5.

Lorsque la charge 50 est équilibrée, sa masse est répartie de manière sensiblement égale sur le premier segment de bras 10 et le deuxième segment de bras 20. Dans ce cas, le premier couple seuil Cₛ₁₁ est sensiblement égal au deuxième couple seuil Cₛ₂₁ et ces valeurs sont atteintes sensiblement en même temps lorsque le premier motoréducteur 11 et le deuxième motoréducteur 21, ainsi que le premier segment de bras 10 et le deuxième segment de bras 20 ont des caractéristiques sensiblement identiques.

Lorsque la charge 50 n'est pas équilibrée, les efforts à fournir par le premier motoréducteur 11 et le deuxième motoréducteur 21 sont différents et peuvent ne pas être atteints en même temps. Ce déséquilibre de la charge 50 se traduit par une différence entre le premier couple seuil Cₛ₁₁ et le deuxième couple seuil Cₛ₂₁ qui est prise en compte par le module 9 dans le paramétrage de la loi d'asservissement en effort qui établit les commandes à appliquer au premier motoréducteur 11 et au deuxième motoréducteur 21 par l'unité de commande et de contrôle 5.

Lorsque l'utilisateur 100 souhaite poser la charge 50, il place celle-ci sur un support de destination. Lorsque l'utilisateur 100 relâche la charge 50, le premier contacteur palmaire 6.1 et le deuxième contacteur palmaire 6.2 passent de l'état fermé à l'état ouvert. L'unité de contrôle et de commande 5 détecte alors la cessation de l'intention de manipuler la charge 50 et procède à une remise à zéro de la valeur de l'estimation M₅₀ₑₛ de la masse de la charge 50 enregistrée dans le module 9.

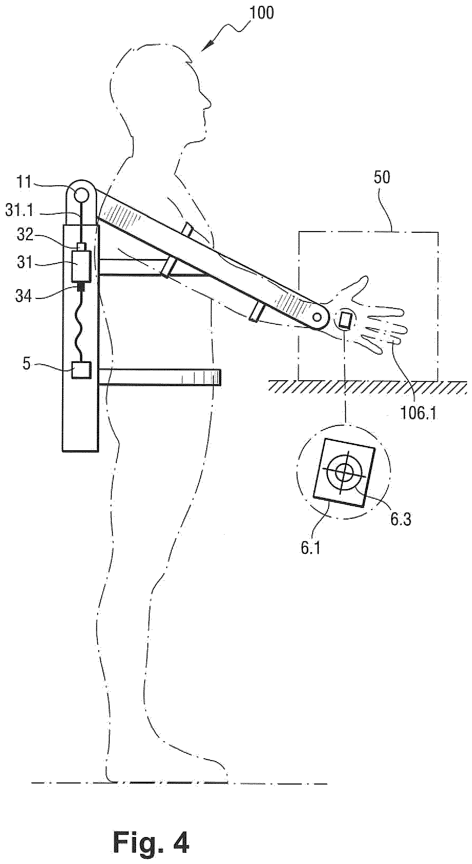

En référence à la figure 4, l'exosquelette 1 comprend également un troisième motoréducteur 31 dont l'axe de sortie 31.1 est orienté sensiblement verticalement lorsque l'utilisateur est en position verticale. L'axe de sortie 31.1 du troisième motoréducteur 31 est relié au premier segment de bras 10 et permet d'imposer un couple de rotation autour d'un axe vertical au premier segment de bras 10. Le troisième motoréducteur 31 est équipé d'un troisième codeur 32 rotatif à points et d'un troisième capteur 34 de courant d'alimentation du troisième motoréducteur 31. Le premier contacteur palmaire 6.1 comprend également une première centrale inertielle 6.3 pour détecter l'orientation du premier contacteur palmaire 6.1.

En fonctionnement, lorsque l'utilisateur 100 souhaite déplacer la charge 50 à manipuler à l'aide de sa main droite 101, il applique sa paume 106.1 sur la charge 50. Le premier contacteur palmaire 6.1 passe de l'état ouvert à l'état fermé. L'unité de contrôle et de commande 5 détecte ce changement d'état et l'interprète comme signifiant une intention de la part de l'utilisateur 100 de manipuler la charge 50. Les informations en provenance de la première centrale inertielle 6.3 indiquent que l'intention de l'utilisateur 100 est de déplacer la charge 50 dans un plan horizontal, depuis la droite vers la gauche de l'utilisateur 100. L'unité de contrôle et de commande 5 fixe alors une troisième consigne 33 de vitesse de cinq degrés par seconde dans un sens visant à déplacer la charge 50 vers la gauche de l'utilisateur 100 au troisième motoréducteur 31 et asservit le troisième motoréducteur 31 à la mesure du codeur 32. Lorsque le couple C₃₁ appliqué par le troisième motoréducteur 31 au premier segment de bras 10 dépasse la valeur d'un couple seuil Cₛ₃₁, le premier segment de bras 10 se déplace et le troisième codeur 32 enregistre une vitesse V₃₁ du troisième motoréducteur 31 non nulle. La valeur du couple seuil Cₛ₃₁ correspond à la résistance à la rotation du troisième motoréducteur 31 exercée essentiellement par la masse de la charge 50 et les frottements statiques avec son support. Lorsque le troisième codeur 32 détecte une vitesse V₃₁ non nulle, l'unité de contrôle et commande 5 enregistre la valeur COMₛ₃₁ atteinte par la commande COM₃₁ envoyée au troisième motoréducteur 31. Dans le cas présent, le troisième motoréducteur 31 étant piloté en intensité, l'unité de contrôle et de commande 5 enregistre la valeur Iₛ₃₁ atteinte par l'intensité d'alimentation I₃₁ du troisième motoréducteur 31. Cette valeur est mesurée à l'aide du troisième capteur 34. L'unité de contrôle et de commande 5 utilise ensuite la valeur Iₛ₃₁ pour déterminer une estimation R₅₀ₑₛ de l'effort résistant exercé par la charge 50. Cette estimation R₅₀ₑₛ est enregistrée dans le module 9 et est ensuite utilisée par le module 9 pour paramétrer une loi d'asservissement en effort qui établit les commandes à appliquer au troisième motoréducteur 31 par l'unité de commande et de contrôle 5.

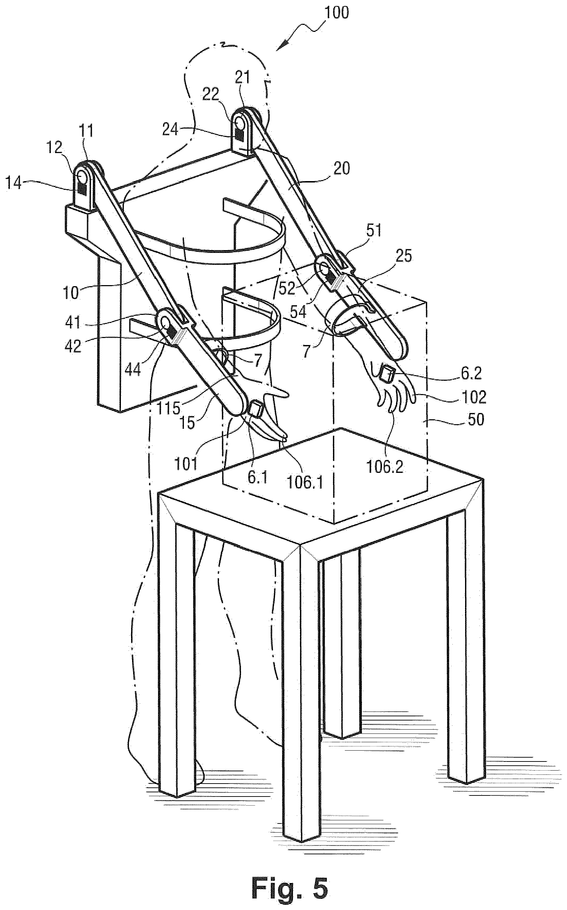

En référence à la figure 5, le premier segment de bras 10 reçoit un premier segment d'avant-bras 15 articulé sur l'extrémité du premier segment de bras 10 à l'aide d'un quatrième motoréducteur 41. Le quatrième motoréducteur 41 est équipé d'un quatrième codeur 42 rotatif à points et d'un quatrième capteur 44 de courant d'alimentation du quatrième motoréducteur 41, tous reliés à l'unité de contrôle et de commande 5. Le premier segment d'avant-bras 15 est relié à l'avant-bras droit 115 de l'utilisateur 100 à l'aide de sangles 7.

Le deuxième segment de bras 20 reçoit, de manière homologue, un deuxième segment d'avant-bras 25 articulé sur l'extrémité du deuxième segment de bras gauche 20 à l'aide d'un cinquième motoréducteur 51 relié à l'unité de contrôle et de commande 5. Le cinquième motoréducteur 51 est équipé d'un cinquième codeur 52 rotatif à points et d'un cinquième capteur 54 de courant d'alimentation du cinquième motoréducteur 51.

En fonctionnement, lorsque l'utilisateur 100 saisit une charge 50 à manipuler à l'aide de sa main droite 101 et sa main gauche 102, il enserre la charge 50 entre la paume 106.1 de sa main droite 101 et la paume 106.2 de sa main gauche 102. Le premier contacteur palmaire 6.1 et le deuxième contacteur palmaire 6.2 passent de l'état ouvert à l'état fermé. L'unité de contrôle et de commande 5 détecte ces changements d'état et les interprète comme signifiant une intention de la part de l'utilisateur 100 de manipuler la charge 50. L'unité de contrôle et de commande 5 fixe alors une première consigne 13 de vitesse de dix centimètres par seconde dans un sens visant à lever la charge 50. L'unité de contrôle commande 5 réalise alors un asservissement dans l'espace cartésien (également appelé espace opérationnel) et calcule (via les modèles de l'exosquelette) ainsi le couple à envoyer en consigne au premier motoréducteur 11, au deuxième motoréducteur 21, au quatrième motoréducteur 41 et au cinquième motoréducteur 51 (ici des rotations ou couples vers le haut dans le plan vertical de la figure 5). L'unité de contrôle commande 5 utilise les valeurs des codeurs 12, 22, 42 et 52 pour calculer la position et la vitesse cartésiennes des poignets, et ainsi réaliser l'asservissement cartésien. L'unité de contrôle et de commande 5 se charge alors également de gérer le couplage entre les axes et d'assurer que la vitesse de dix centimètres par seconde de la charge est bien respectée. Une alternative plus simple concernant le pilotage du quatrième motoréducteur 41 et du cinquième motoréducteur 51, consiste, pour l'unité de contrôle et de commande 5, à commander un blocage des rotations du quatrième motoréducteur 41 et du cinquième motoréducteur 51, ou à réaliser un simple couplage cinématique en utilisant la valeur des codeurs 12 et 22.

L'unité de commande et de contrôle surveille alors les signaux en provenance du premier codeur 12, du deuxième codeur 22, du quatrième codeur 42 et du cinquième codeur 52. Lorsque le premier codeur 12 et/ou le quatrième codeur 42 détectent un mouvement, l'unité de contrôle et de commande 5 maintient et enregistre la valeur COMₛ₁₁ atteinte par la commande COM₁₁ envoyée au premier motoréducteur 11 et la valeur COMₛ₄₁ atteinte par la commande COM₄₁ envoyée au quatrième motoréducteur 41.

Lorsque le deuxième codeur 22 et/ou le cinquième codeur 52 détectent un mouvement, l'unité de contrôle et de commande 5 maintient et enregistre la valeur COMₛ₂₁ atteinte par la commande COM₂₁ envoyée au deuxième motoréducteur 21 et la valeur COMₛ₅₁ atteinte par la commande COM₅₁ envoyée au cinquième motoréducteur 51. Sur la base de la valeur des commandes COMₛ₁₁, COMₛ₄₁, COMₛ₂₁ et COMₛ₅₁, l'unité de contrôle et de commande 5 détermine une estimation M₅₀ₑₛ (ou de M₅₀ₑₛ multipliée par le bras de levier si la valeur du bras de levier n'est pas connue) de la masse de la charge 50, par exemple à l'aide d'une modélisation de l'exosquelette 1. Cette estimation M₅₀ₑₛ est enregistrée dans le module 9 et est ensuite utilisée par le module 9 pour paramétrer une loi d'asservissement en effort qui établit les commandes à appliquer au premier motoréducteur 11, au deuxième motoréducteur 21, au quatrième motoréducteur 41 et au cinquième motoréducteur 51 par l'unité de commande et de contrôle 5.

Lorsque l'utilisateur 100 souhaite poser la charge 50, il place celle-ci sur un support de destination. Lorsque l'utilisateur 100 relâche la charge 50, le premier contacteur palmaire 6.1 et le deuxième contacteur palmaire 6.2 passent de l'état fermé à l'état ouvert. L'unité de contrôle et de commande 5 détecte alors la cessation de l'intention de manipuler la charge 50 et procède à une remise à zéro de la valeur de l'estimation M₅₀ₑₛ de la masse de la charge 50 enregistrée dans le module 9.

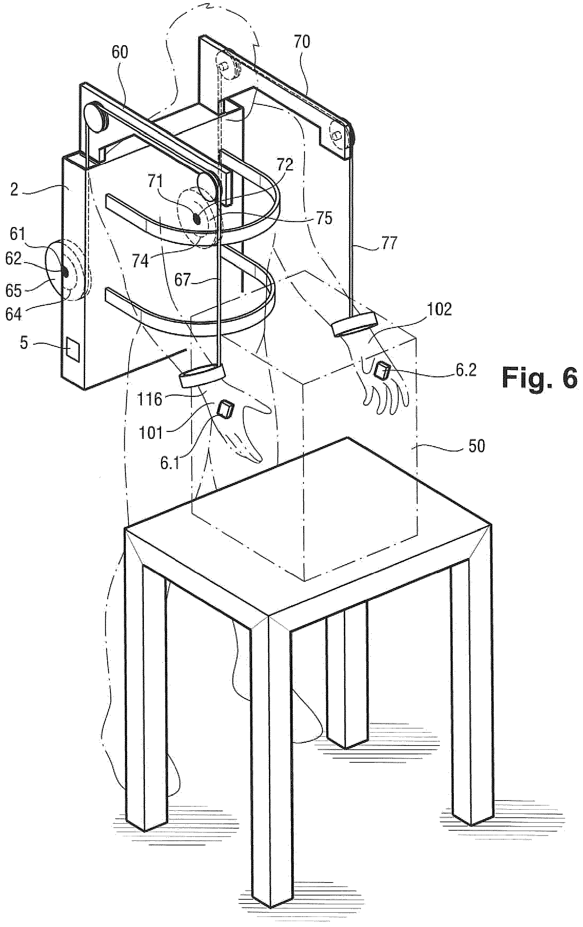

En référence à la figure 6, le segment dorsal 2 de l'exosquelette 1 comprend une première potence 60 et un sixième motoréducteur 61 d'enroulement autour d'un premier tambour 65 d'un premier câble 66 dont une première extrémité 67 est reliée au poignet droit 116 de l'utilisateur 100. Le sixième motoréducteur 61 est équipé d'un sixième codeur 62 rotatif à points et d'un sixième capteur 64 de couple de sortie du sixième motoréducteur 61, tous reliés à l'unité de contrôle et de commande 5. De manière homologue, le segment dorsal 2 de l'exosquelette 1 comprend une deuxième potence 70 et un septième motoréducteur 71 d'enroulement autour d'un deuxième tambour 75 d'un deuxième câble 76 dont une deuxième extrémité 77 est reliée au poignet gauche 117 de l'utilisateur 100. Le septième motoréducteur 71 est équipé d'un septième codeur 72 rotatif à points et d'un septième capteur 74 de couple de sortie du septième motoréducteur 71, tous reliés à l'unité de contrôle et de commande 5.

En fonctionnement, lorsque l'utilisateur 100 saisit une charge 50 à manipuler à l'aide de sa main droite 101 et sa main gauche 102, il enserre la charge 50 entre la paume 106.1 de sa main droite 101 et la paume 106.2 de sa main gauche 102. Le premier contacteur palmaire 6.1 et le deuxième contacteur palmaire 6.2 passent de l'état ouvert à l'état fermé. L'unité de contrôle et de commande 5 détecte ces changements d'état et les interprète comme signifiant une intention de la part de l'utilisateur 100 de manipuler la charge 50. L'unité de contrôle et de commande 5 applique alors une commande 63 de couple croissante dans un sens visant à lever la charge 50 au sixième motoréducteur 61 (ici une rotation du sixième motoréducteur 61 dans un sens positif) . Cette commande peut prendre la forme d'une augmentation du couple de sortie du sixième motoréducteur 61 d'un newton mètre par seconde. L'unité de contrôle et de commande 5 applique également une commande 73 de couple croissante dans un sens visant à lever la charge 50 au septième motoréducteur 71 (ici une rotation du septième motoréducteur 71 dans un sens positif). Cette commande peut prendre la forme d'une augmentation du couple de sortie du septième motoréducteur 71 d'un newton mètre par seconde.

Lorsque l'effort F₆₁ appliqué par le sixième motoréducteur 61 sur le premier câble 66 dépasse la valeur d'un sixième effort seuil Fₛ₆₁, le premier tambour 65 se déplace et le sixième codeur 62 enregistre une vitesse V₆₁ du sixième motoréducteur 61 non nulle. L'unité de contrôle et de commande 5 enregistre et maintient alors la valeur C₆₁ du couple de sortie du sixième motoréducteur 61 enregistré par le sixième capteur 64. Lorsque l'effort F₇₁ appliqué par le septième motoréducteur 71 sur le deuxième câble 76 dépasse la valeur d'un septième effort seuil Fₛ₇₁, le deuxième tambour 75 se déplace et le septième codeur 72 enregistre une vitesse V₇₁ du septième motoréducteur 71 non nulle. L'unité de contrôle et de commande 5 enregistre et maintient alors la valeur C₇₁ du couple de sortie du septième motoréducteur 71 enregistré par le septième capteur 74.

L'unité de contrôle et de commande 5 utilise ensuite les valeurs C₆₁ et C₇₁ de couple de sortie pour déterminer une estimation M₅₀ₑₛ de la masse de la charge 50. Cette estimation M₅₀ₑₛ peut être obtenue en divisant la valeur C₆₁ du couple de sortie du premier motoréducteur 61 mesuré par le rayon du premier tambour 65 et la valeur C₇₁ du couple de sortie du deuxième motoréducteur 71 mesuré par le rayon du deuxième tambour 75. L'estimation M₅₀ₑₛ est enregistrée dans le module 9 et est ensuite utilisée par le module 9 pour paramétrer une loi d'asservissement en effort qui établit les commandes à appliquer au sixième motoréducteur 61 et au septième motoréducteur 71.

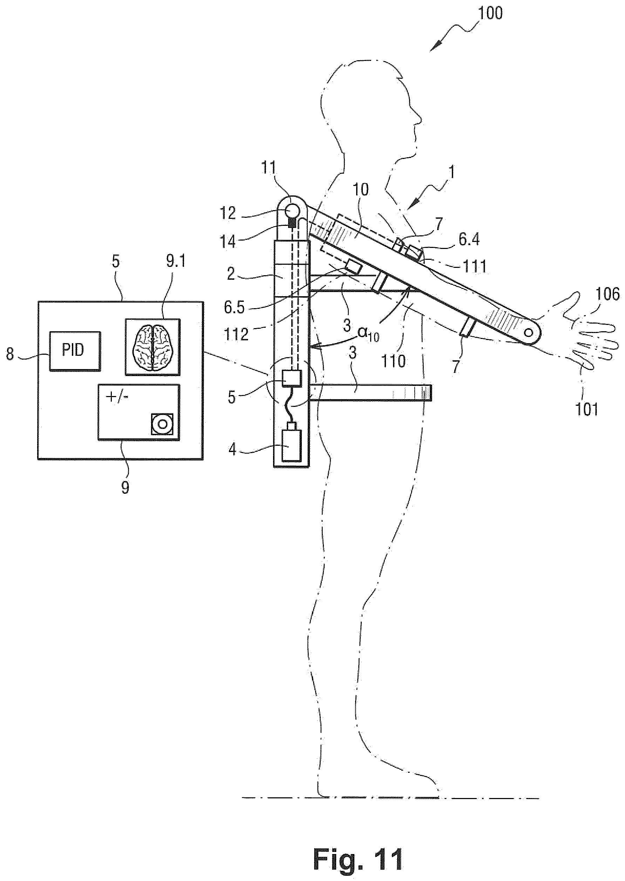

Selon un dixième mode de réalisation représenté en figure 11, mais applicable à toutes les architectures de bras mentionnées précédemment), l'exosquelette 1 comprend un premier capteur myoélectrique 6.4 placé sur le biceps 111 du bras droit 110 de l'utilisateur 100 et un deuxième capteur myoélectrique 6.5 placé sur le triceps 112 de l'utilisateur 100. Le premier capteur myoélectrique 6.4 et le deuxième capteur myoélectrique 6.5 sont reliés à un module 9.1 d'intelligence artificielle à base de réseau de neurones de l'unité de contrôle et de commande 5.

En fonctionnement, lorsque l'utilisateur 100 souhaite lever la charge 50 à manipuler de masse inconnue, il s'en saisit et contracte le biceps 111 du bras droit 110 pour appliquer un effort de levage à la charge 50. La contraction du biceps 111 est supérieure à celle que provoquerait un mouvement du bras droit 110 sans charge. La signature myoélectrique spécifique d'un mouvement du bras droit 110 chargé, et qui est représentative d'une intention de lever la charge 50, est détectée par le premier capteur myoélectrique 6.4. Le module 9.1 analyse le signal transmis par le premier capteur myoélectrique 6.4 et identifie une intention de manipuler la charge 50. L'unité de contrôle et de commande 5 fixe alors une première consigne 13 de vitesse de cinq degrés par seconde dans un sens visant à lever la charge 50 au premier motoréducteur 11 (ici une rotation vers le haut dans un plan vertical selon la représentation de la figure 11) et asservit le premier motoréducteur 11 à la mesure du codeur 12. L'algorithme correcteur intégral 8 mesure l'erreur entre la mesure du premier codeur 12 et la première consigne 13 et ajuste la valeur de la commande COM₁₁ envoyée au premier motoréducteur 11 par l'unité de contrôle et de commande 5 en conséquence. Ainsi, tant que le premier codeur 12 mesure une vitesse nulle, l'unité de contrôle et de commande 5 envoie une commande de couple croissante au premier motoréducteur 11. Lorsque le couple C₁₁ appliqué par le premier motoréducteur 11 au premier segment de bras 10 dépasse la valeur d'un couple seuil Cₛ, le bras 10 de l'exosquelette 1 reprend alors une proportion de la masse de la charge 50 telle que l'utilisateur 100 cesse d'appliquer un effort de levage. Il en résulte une baisse de la contraction du biceps 111 qui est détectée par le premier capteur myoélectrique 6.4. Le module 9.1 analyse le signal transmis par le premier capteur myoélectrique 6.4 et identifie une cessation de l'intention de manipuler la charge 50. L'unité de contrôle et de commande 5 enregistre alors la valeur du couple C₁₁ appliqué au motoréducteur 11 et réalise alors une estimation M₅₀ₑₛ de la masse de la charge 50 de la même façon que pour les modes de réalisation précédemment décrits. Cette estimation M₅₀ₑₛ est enregistrée dans le module 9 et est ensuite utilisée par le module 9 pour paramétrer une loi d'asservissement en effort qui établit les commandes à appliquer au premier motoréducteur 11 par l'unité de commande et de contrôle 5. Cette loi est utilisée pour commander le premier motoréducteur 11 lors de la manipulation ultérieure de la charge 50.

Lorsque l'utilisateur souhaite reposer la charge 50, les signatures myoélectriques détectée par le premier capteur myoélectrique 6.4 et le deuxième capteur myoélectrique 6.5 sont envoyées au module 9.1 qui, après analyse, détecte une combinaison de signaux représentative d'une intention de poser la charge 50. L'exploitation des signaux en provenance du deuxième capteur myoélectrique 6.5 est particulièrement efficace pour identifier l'intention de poser la charge 50. L'unité de contrôle et de commande 5 procède alors à une remise à zéro de la valeur de l'estimation M₅₀ₑₛ de la masse de la charge 50 enregistrée dans le module 9.

Avantageusement, le premier capteur myoélectrique 6.4 et le deuxième capteur myoélectriques 6.5 peuvent être utilisés en complément des autres capteurs d'intention de lever/poser la charge décrits dans les modes de réalisation ci-dessous afin d'améliorer la robustesse de la commande.

Bien entendu, l'invention n'est pas limitée aux modes de réalisation décrits mais englobe toute variante entrant dans le champ de l'invention telle que définie par les revendications.

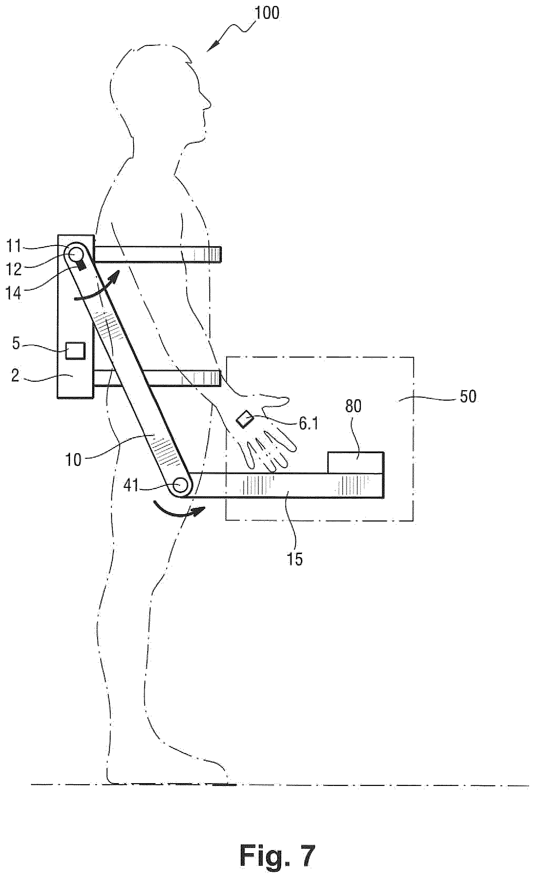

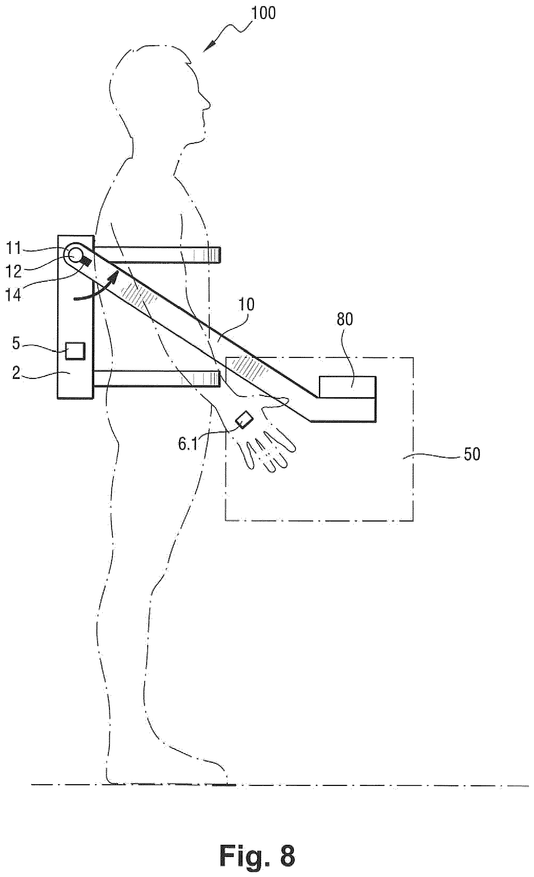

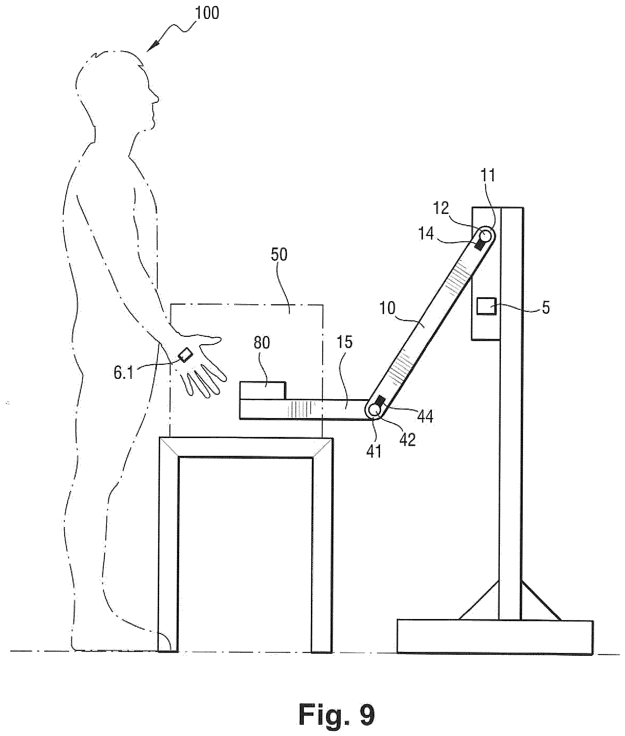

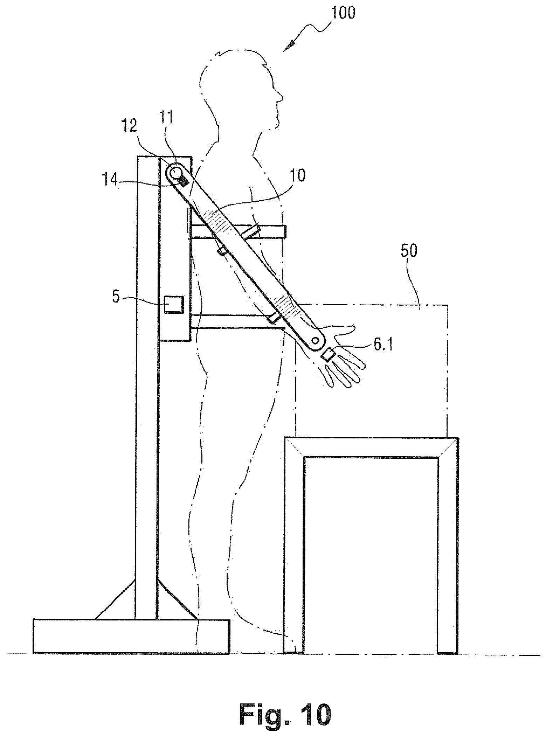

En particulier,
- bien qu'ici la liaison de la charge 50 à l'exosquelette soit assurée par les mains de l'utilisateur 100, l'invention s'applique également à une liaison directe de la charge 50 à l'exosquelette comme par exemple à l'aide de patins de préhension 80 (figures 7 et 8) ou de fourches ;
- bien qu'ici le segment de bras de l'exosquelette soit relié au bras de l'utilisateur, l'invention s'applique également à un segment de bras dépourvu de liaison à l'utilisateur (figures 7 et 8) ;
- bien qu'ici l'invention ait été décrite en lien avec un exosquelette porté par un utilisateur, l'invention s'applique également à d'autres types de cobot comme par exemple des manipulateurs de charge à base fixe avec saisie en parallèle (figure 9) ou saisie par l'utilisateur (figure 10) ;
- bien qu'ici l'exosquelette comprenne un motoréducteur, l'invention s'applique également à d'autres types d'actionneurs comme par exemple des vérins à câbles, des actionneurs linéaires hydrauliques, pneumatiques ou électriques ;
- bien qu'ici les motoréducteurs soient pourvus d'un codeur rotatif à points, l'invention s'applique également à d'autres moyens de détecter un mouvement de l'actionneur comme par exemple un codeur à câble, un résolveur, un capteur à effet hall, une piste résistive, une centrale inertielle ;
- bien qu'ici l'unité de contrôle et de commande fixe une consigne de vitesse de cinq degrés par seconde ou de dix centimètres par seconde, l'invention s'applique à d'autres valeurs de la consigne de vitesse comme par exemple toute valeur de vitesse angulaire ou linéaire non nulle ;
- bien qu'ici la valeur de la vitesse seuil soit d'un mètre par seconde, l'invention s'applique également à d'autres valeurs de la vitesse seuil comme par exemple toute valeur non nulle ;
- bien qu'ici l'unité de contrôle et de commande applique un couple croissant d'un newton mètre par seconde, l'invention s'applique à d'autres valeurs de couple croissant comme par exemple toute valeur non nulle ;
- bien qu'ici l'unité de contrôle et de commande détermine une estimation de la charge à manipuler, l'invention s'applique également à une estimation d'autres types d'effort résistant comme par exemple la résistance à la translation d'une charge sur roues ou la résistance à l'enfoncement dans le sol d'un pieu ;
- bien qu'ici l'exosquelette comprenne un contacteur palmaire, l'invention s'applique également à d'autres moyens de détecter une intention de manipuler la charge à manipuler comme par exemple une commande vocale, un capteur d'attitude, un capteur de pression ou une cellule photoélectrique ;
- bien qu'ici l'exosquelette comprenne un contacteur palmaire unique, l'invention s'applique également à d'autres moyens de détecter une intention de manipuler la charge comme par exemple un cobot comprenant un ou plusieurs capteurs de pression, de flexion, d'attitude, un ou plusieurs accéléromètres, un ou plusieurs capteurs myo-électriques. Ces capteurs peuvent également associés à un module d'intelligence artificielle ;
- bien qu'ici l'unité de commande applique une commande de couple croissante à l'actionneur, l'invention s'applique également à d'autres types de commande d'effort croissante comme par exemple une commande de force croissante ;

- bien qu'ici l'étape de détecter un mouvement de l'actionneur comprenne une étape de détecter le franchissement d'un seuil de vitesse de l'actionneur, l'invention s'applique également à d'autres moyens de détecter un mouvement de l'actionneur comme par exemple le franchissement d'un seuil de déplacement ou un seuil d'accélération ;
- bien qu'ici l'étape de détecter un mouvement de l'actionneur comprenne une étape de détecter le franchissement d'un seuil de vitesse de l'actionneur, l'invention s'applique également à d'autres moyens de détecter un mouvement de la charge comme par exemple le franchissement d'un seuil de déplacement, de vitesse ou d'accélération de la charge, via l'utilisation de capteurs de position articulaire, ou d'une centrale inertielle placée sur l'organe terminal du robot, sur la main de l'utilisateur ou directement sur la charge ;
- bien qu'ici la valeur estimée M₅₀ₑₛ corresponde à la masse exacte de la charge, l'invention s'applique également dans les cas où l'utilisateur applique un effort de lever de charge, et biaise ainsi l'estimation. Dans ce cas, la compensation de charge en fonctionnement sera diminuée de la valeur du biais, et ce biais restera à la charge de l'utilisateur ;
   - bien qu'ici la commande dans l'espace opérationnel calcul une consigne de couple dans l'espace articulaire ou moteur (c'est-à-dire pour les motoréducteurs), l'invention s'applique au cas où la commande cartésienne calculerait une consigne de vitesse articulaire (via par exemple une jacobienne inverse), ou une consigne de position articulaire (via par exemple un modèle géométrique inverse) ;
   - bien qu'ici le module de commande et de contrôle utilise la valeur de la consigne de courant appliquée au(x) motoréducteur(s) pour déterminer une estimation de la masse de la charge, l'invention s'applique également à d'autres types de commandes appliquées au motoréducteur comme par exemple une fréquence, une tension ou un couple ;
   - bien qu'ici le capteur lié au motoréducteur soit un capteur de courant ou un capteur de couple, l'invention s'applique également à d'autres types de capteurs comme par exemple un capteur d'effort d'allongement d'un segment de bras ou de cisaillement de celui-ci. Ces capteurs peuvent être placés en amont ou en aval de l'actionneur, et préférentiellement directement en sortie du motoréducteur ;
   - bien qu'ici l'exosquelette comprenne un premier et un deuxième capteurs myoélectriques respectivement placé sur le biceps et le triceps de l'utilisateur, l'invention s'applique à d'autres moyens de détecter l'intention de poser et/ou déposer la charge à manipuler comme par exemple un unique capteur myoélectrique, plus de deux ou des capteurs implantés sur d'autres groupes musculaires, tel que l'avant-bras, l'épaule, les trapèzes ou les pectoraux ;
   - bien qu'ici les capteurs myoélectriques soient reliés à un module d'intelligence artificielle à base de réseau de neurones, l'invention s'applique également à d'autres moyens d'analyse des signaux en provenance de ces capteurs comme par exemple un module logique simple, un module à criticité heuristique adaptative ou de type Artmap.

## Revendications

1. Procédé de commande d'un actionneur (11, 21, 31, 41, 51, 61, 71) d'un cobot, l'actionneur étant fonctionnellement relié à une charge (50) à manipuler et piloté par une unité de contrôle et de commande (5), le procédé comprenant les étapes de :
- détecter une intention de manipuler la charge à manipuler (50) par un utilisateur du cobot;
- appliquer une commande croissante à l'actionneur (11, 21, 31, 41, 51, 61, 71) visant à provoquer un déplacement de la charge à manipuler (50) jusqu'à détecter un mouvement de l'actionneur (11, 21, 31, 41, 51, 61, 71) ou de la charge à manipuler (50) ou une cessation de l'intention de manipuler la charge à manipuler (50) ;
- enregistrer une valeur atteinte par la commande et/ou par un capteur (14, 24, 34, 44, 54, 64, 74) lié à l'actionneur (11, 21, 31, 41, 51, 61, 71) lorsqu'un mouvement de l'actionneur (11, 21, 31, 41, 51, 61, 71) ou de la charge à manipuler (50) est détecté ou qu'une cessation de l'intention de manipuler la charge à manipuler (50) est détectée ;
- utiliser la valeur enregistrée atteinte par la commande et/ou par le capteur lié à l'actionneur (11, 21, 31, 41, 51, 61, 71) pour déterminer une estimation d'un effort résistant (M₅₀ₑₛ, R₅₀ₑₛ) exercé par la charge à manipuler (50) ;
- commander l'actionneur à l'aide d'une loi d'asservissement en effort en utilisant l'estimation de l'effort résistant (M₅₀ₑₛ, R₅₀ₑₛ) exercé par la charge à manipuler (50) pour établir les commandes à appliquer à l'actionneur (11, 21, 31, 41, 51, 61, 71).

2. Procédé de commande selon la revendication 1, dans lequel la commande croissante résulte d'une consigne de vitesse non nulle appliquée par l'unité de contrôle et de commande (5).

3. Procédé de commande selon la revendication 1, dans lequel la commande croissante comprend une commande d'effort croissante appliquée par l'unité de contrôle et de commande (5) .

4. Procédé de commande selon la revendication 3, dans lequel la commande d'effort croissante comprend une commande de couple.

5. Procédé de commande selon l'une des revendications précédentes, dans lequel la détermination de l'estimation de l'effort résistant (M₅₀ₑₛ, R₅₀ₑₛ) de la charge à manipuler (50) se fait en utilisant la valeur prise par un capteur du courant (14, 24, 34, 44, 54, 64, 74) de l'actionneur (11, 21, 31, 41, 51, 61, 71) lorsqu'un mouvement de l'actionneur (11, 21, 31, 41, 51, 61, 71) a été détecté.

6. Procédé de commande selon l'une des revendications 1 à 4, dans lequel la détermination de l'estimation de l'effort résistant (M₅₀ₑₛ, R₅₀ₑₛ) de la charge à manipuler (50) se fait en utilisant la valeur prise par une consigne de courant envoyée à l'actionneur (11, 21, 31, 41, 51, 61, 71) lorsqu'un mouvement de l'actionneur (11, 21, 31, 41, 51, 61, 71) a été détecté.

7. Procédé de commande selon l'une des revendications précédentes, dans lequel l'étape de détecter un mouvement de l'actionneur (11, 21, 31, 41, 51, 61, 71) comprend une étape de détecter le franchissement d'un seuil de vitesse (Vₛ₁₁, V_{S21}, V_{S31}, V_{S41}, V_{S51}) ou le franchissement d'un seuil de déplacement ou le franchissement d'un seuil d'accélération.

8. Procédé de commande selon l'une des revendications précédentes, dans lequel l'étape de détecter une intention de manipuler la charge à manipuler (50) comprend une étape de détecter un changement d'état d'un capteur d'intention (6.1, 6.2).

9. Procédé de commande selon la revendication 8, dans lequel le capteur d'intention (6.1, 6.2) comprend un contact sec.

10. Procédé de commande selon les revendications 8 ou 9, dans lequel le capteur d'intention (6.1, 6.2) est positionné sur une main (101, 102) d'un utilisateur (100) de l'actionneur.

11. Procédé de commande selon les revendications 8 à 10, dans lequel le capteur d'intention (6.1, 6.2) comprend un capteur de pression et/ou un capteur d'attitude et/ou un capteur d'accélération et/ou un capteur de flexion et/ou un capteur myo-électrique.

12. Procédé de commande selon l'une quelconque des revendications précédentes, comprenant l'étape supplémentaire de mettre la valeur de l'estimation de l'effort résistant (M₅₀ₑₛ, R₅₀ₑₛ) exercé par la charge à manipuler (50) à zéro lorsque la détection de l'intention de manipuler la charge cesse.

13. Cobot (1) comprenant une unité de contrôle et de commande (5) reliée à un actionneur (11, 21, 31, 41, 51, 61, 71), le cobot (1) comprenant également des moyens de détection (6.1 ; 6.2) d'une intention de manipuler une charge (50) par un utilisateur du cobot (1) et, optionnellement, un capteur (14, 24, 34, 44, 54, 64, 74) lié à l'actionneur (11, 21, 31, 41, 51, 61, 71) reliés à l'unité de contrôle et de commande (5), le cobot (1) étant agencé pour mettre en œuvre le procédé selon l'une quelconque des revendications 1 à 6.

14. Cobot (1) selon la revendication 13, dans lequel les moyens de détection (6.1 ; 6.2) d'une intention de manipuler une charge (50) comprennent un capteur d'intention (6.1, 6.2), le cobot étant agencé pour mettre en œuvre le procédé selon la revendication 8 à 12.

## Patentansprüche

1. Verfahren zum Steuern eines Aktors (11, 21, 31, 41, 51, 61, 71) eines Cobots, wobei der Aktor funktional mit einer handzuhabenden Last (50) verbunden ist und durch eine Kontroll- und Steuereinheit (5) gesteuert wird, wobei das Verfahren die Schritte umfasst:
- Detektieren einer Intention eines Benutzers des Cobots zur Handhabung der handzuhabenden Last (50);
- Anwenden einer zunehmenden Steuerung auf den Aktor (11, 21, 31, 41, 51, 61, 71), die darauf abzielt, eine Verschiebung der handzuhabenden Last (50) zu verursachen, bis eine Bewegung des Aktors (11, 21, 31, 41, 51, 61, 71) oder der handzuhabenden Last (50) oder eine Beendigung der Intention zur Handhabung der handzuhabenden Last (50) detektiert wird;
- Speichern eines Werts, der von der Steuerung und/oder von einem mit dem Aktor (11, 21, 31, 41, 51, 61, 71) verbundenen Sensor (14, 24, 34, 44, 54, 64, 74) erreicht wird, wenn eine Bewegung des Aktors (11, 21, 31, 41, 51, 61, 71) oder der handzuhabenden Last (50) detektiert wird oder wenn eine Beendigung der Intention zur Handhabung der handzuhabenden Last (50) detektiert wird;
- Verwenden des gespeicherten Werts, der von der Steuerung und/oder von dem mit dem Aktor (11, 21, 31, 41, 51, 61, 71) verbundenen Sensor erreicht wird, um eine Schätzung einer Widerstandskraft (M₅₀ₑₛ, R₅₀ₑₛ) zu bestimmen, die durch die handzuhabende Last (50) ausgeübt wird;
- Steuern des Aktors mit Hilfe eines Kraftregelgesetzes, indem die Schätzung der Widerstandskraft (M₅₀ₑₛ, R₅₀ₑₛ) verwendet wird, die von der handzuhabenden Last (50) ausgeübt wird, um die auf den Aktor (11, 21, 31, 41, 51, 61, 71) aufzubringenden Steuerungen festzulegen.

2. Steuerverfahren nach Anspruch 1, bei dem die zunehmende Steuerung aus einem Geschwindigkeitssollwert von ungleich Null resultiert, der von der Kontroll- und Steuereinheit (5) aufgebracht wird.

3. Steuerverfahren nach Anspruch 1, bei dem die zunehmende Steuerung eine zunehmende Kraftsteuerung umfasst, die von der Kontroll- und Steuereinheit (5) aufgebracht wird.

4. Steuerverfahren nach Anspruch 3, bei dem die zunehmende Kraftsteuerung eine Drehmomentsteuerung umfasst.

5. Steuerverfahren nach einem der vorhergehenden Ansprüche, bei dem die Bestimmung der Schätzung der Widerstandskraft (M₅₀ₑₛ, R₅₀ₑₛ) der handzuhabenden Last (50) unter Verwendung des Werts erfolgt, der von einem Stromsensor (14, 24, 34, 44, 54, 64, 74) des Aktors (11, 21, 31, 41, 51, 61, 71) angenommen wird, wenn eine Bewegung des Aktors (11, 21, 31, 41, 51, 61, 71) detektiert worden ist.

6. Steuerverfahren nach einem der Ansprüche 1 bis 4, bei dem die Bestimmung der Schätzung der Widerstandskraft (M₅₀ₑₛ, R₅₀ₑₛ) der handzuhabenden Last (50) unter Verwendung des Werts erfolgt, der von einem Stromsollwert angenommen wird, der dem Aktor (11, 21, 31, 41, 51, 61, 71) gesendet wird, wenn eine Bewegung des Aktors (11, 21, 31, 41, 51, 61, 71) detektiert worden ist.

7. Steuerverfahren nach einem der vorhergehenden Ansprüche, bei dem der Schritt des Detektierens einer Bewegung des Aktors (11, 21, 31, 41, 51, 61, 71) einen Schritt des Detektierens des Überschreitens eines Geschwindigkeitsschwellenwerts (V_{S11}, V_{S21}, V_{S31}, V_{S41}, V_{S51}) oder des Überschreitens eines Verschiebungsschwellenwerts oder des Überschreitens eines Beschleunigungsschwellenwerts umfasst.

8. Steuerverfahren nach einem der vorhergehenden Ansprüche, bei dem der Schritt des Detektierens einer Intention zur Handhabung der handzuhabenden Last (50) einen Schritt des Detektierens eines Zustandswechsels eines Intentionssensors (6.1, 6.2) umfasst.

9. Steuerverfahren nach dem Anspruch 8, bei dem der Intentionssensor (6.1, 6.2) einen potentialfreien Kontakt umfasst.

10. Steuerverfahren nach den Ansprüchen 8 oder 9, bei dem der Intentionssensor (6.1, 6.2) an einer Hand (101, 102) eines Benutzers (100) des Aktors positioniert wird.

11. Steuerverfahren nach den Ansprüchen 8 bis 10, bei dem der Intentionssensor (6.1, 6.2) einen Drucksensor und/oder einen Lagesensor und/oder einen Beschleunigungssensor und/oder einen Biegesensor und/oder einen myoelektrischen Sensor umfasst.

12. Steuerverfahren nach einem der vorhergehenden Ansprüche, umfassend den zusätzlichen Schritt des Setzens des Wertes der Schätzung der Widerstandskraft (M₅₀ₑₛ, R₅₀ₑₛ), die von der handzuhabenden Last (50) ausgeübt wird, auf Null, wenn die Detektion der Intention zur Handhabung der Last aufhört.

13. Cobot (1), umfassend eine Kontroll- und Steuereinheit (5), die mit einem Aktor (11, 21, 31, 41, 51, 61, 71) verbunden ist, wobei der Cobot (1) ferner Detektionsmittel (6.1; 6.2) zur Detektion einer Intention eines Benutzers des Cobots (1) zur Handhabung einer Last (50) und optional einen mit dem Aktor (11, 21, 31, 41, 51, 61, 71) verbundenen Sensor (14, 24, 34, 44, 54, 64, 74) umfasst, die mit der Kontroll- und Steuereinheit (5) verbunden sind, wobei der Cobot (1) ausgebildet ist, um das Verfahren nach einem der Ansprüche 1 bis 6 durchzuführen.

14. Cobot (1) nach Anspruch 13, bei dem die Detektionsmittel (6.1; 6.2) zum Detektieren einer Intention zur Handhabung einer Last (50) einen Intentionssensor (6.1, 6.2) umfassen, wobei der Cobot ausgebildet ist, um das Verfahren nach den Ansprüchen 8 bis 12 durchzuführen.

## Claims

1. A control method for controlling an actuator (11, 21, 31, 41, 51, 61, 71) of a cobot, the actuator being functionally connected to a load (50) for handling and being controlled by a monitor and control unit (5), the method comprising the steps of:
• detecting an intention of a user of the cobot to handle the load (50) for handling;
• applying an increasing command to the actuator (11, 21, 31, 41, 51, 61, 71) seeking to cause the load (50) for handling to move until detecting a movement of the actuator (11, 21, 31, 41, 51, 61, 71) or of the load (50) for handling or until detecting that the intention to handle the load (50) for handling has ceased;
• storing the value reached by the command and/or by a sensor (14, 24, 34, 44, 54, 64, 74) linked to the actuator (11, 21, 31, 41, 51, 61, 71) when a movement of the actuator (11, 21, 31, 41, 51, 61, 71) or of the load (50) for handling is detected or when detecting that the intention to handle the load (50) for handling has ceased;
• using the stored value reached by the command and/or by the sensor linked to the actuator (11, 21, 31, 41, 51, 61, 71) to determine an estimate of the opposing force (M₅₀ₑₛ, R₅₀ₑₛ) exerted by the load (50) for handling; and
• controlling the actuator by means of a force servocontrol relationship using the estimate of the opposing force (M₅₀ₑₛ, R₅₀ₑₛ) exerted by the load (50) for handling in order to establish the commands to be applied to the actuator (11, 21, 31, 41, 51, 61, 71).

2. A control method according to claim 1, wherein the increasing command results from a non-zero speed setpoint applied by the monitor and control unit (5).

3. A control method according to claim 1, wherein the increasing command comprises an increasing force command applied by the monitor and control unit (5).

4. A control method according to claim 3, wherein the increasing force command comprises a torque command.

5. A control method according to any preceding claim, wherein the estimate of the opposing force (M₅₀ₑₛ, R₅₀ₑₛ) of the load (50) for handling is determined by using the value taken by a sensor (14, 24, 34, 44, 54, 64, 74) for sensing the current of the actuator (11, 21, 31, 41, 51, 61, 71) when a movement of the actuator (11, 21, 31, 41, 51, 61, 71) is detected.

6. A control method according to any one of claims 1 to 4, wherein the estimate of the opposing force (M₅₀ₑₛ, R₅₀ₑₛ) of the load (50) for handling is determined by using the value taken by a current setpoint being sent to the actuator (11, 21, 31, 41, 51, 61, 71) when a movement of the actuator (11, 21, 31, 41, 51, 61, 71) is detected.

7. A control method according to any preceding claim, wherein the step of detecting a movement of the actuator (11, 21, 31, 41, 51, 61, 71) comprises a step of detecting the crossing of a speed threshold (V_{S11}, V_{S21}, V_{S31}, V_{S41}, V_{S51}) or the crossing of a movement threshold or the crossing of an acceleration threshold.

8. A control method according to any preceding claim, wherein the step of detecting an intention to handle the load (50) for handling comprises a step of detecting a change of state of an intention sensor (6.1, 6.2).

9. A control method according to claim 8, wherein the intention sensor (6.1, 6.2) comprises a dry contact.

10. A control method according to claim 8 or claim 9, wherein the intention sensor (6.1, 6.2) is positioned on a hand (101, 102) of a user (100) of the actuator.

11. A control method according to any one of claims 8 to 10, wherein the intention sensor (6.1, 6.2) comprises a pressure sensor and/or an attitude sensor and/or an acceleration sensor and/or a flexion sensor and/or a myoelectrical sensor.

12. A control method according to any preceding claim, including the additional step of resetting the value of the estimate of the opposing force (M₅₀ₑₛ, R₅₀ₑₛ) exerted by the load (50) for handling to zero when the intention to handle the load ceases to be detected.

13. A cobot (1) including a monitor and control unit (5) connected to an actuator (11, 21, 31, 41, 51, 61, 71), the cobot (1) also including detector means (6.1; 6.2) for detecting an intention of a user of the cobot(1) to handle a load (50) and, optionally a sensor (14, 24, 34, 44, 54, 64, 74) linked to the actuator (11, 21, 31, 41, 51, 61, 71) linked to the monitor and control unit (5), the cobot (1) being arranged to perform the method according to any one of claims 1 to 6.

14. A cobot (1) according to claim 13, wherein the detector means (6.1; 6.2) for detecting an intention to handle a load (50) include an intention sensor (6.1, 6.2), the cobot being arranged to perform the method according to any one of claims 8 to 12.
